# EUROPEAN PATENT SPECIFICATION

(11) **EP 2 966 798 B1**
(45) Date of publication and mention of the grant of the patent: **06.11.2019**
(21) Application number: 14788401.9
(22) Date of filing: 09.04.2014
(51) Int. Cl.: H04L 1/22

(54) **ACTIVE AND STANDBY CHANGEOVER METHOD, APPARATUS, DEVICE, AND SYSTEM FOR NETWORK DEVICE**
AKTIVITÄTS- UND STANDBY-UMSCHALTVERFAHREN, MASCHINE, VORRICHTUNG UND SYSTEM FÜR EINE NETZWERKVORRICHTUNG
PROCÉDÉ, APPAREIL, DISPOSITIF ET SYSTÈME DE BASCULEMENT ENTRE ACTIVITÉ ET VEILLE POUR DISPOSITIF DE RÉSEAU

(30) Priority: 24.04.2013 CN 201310145157
(43) Date of publication of application: 13.01.2016
(73) Proprietor: ZTE Corporation, Shenzhen, Guangdong 518057 (CN)
(72) Inventor: SUN, Li, Shenzhen Guangdong 518057 (CN); WANG, Rihong, Shenzhen Guangdong 518057 (CN); ZHANG, Hongwei, Shenzhen Guangdong 518057 (CN)
(74) Representative: Aipex B.V.
(86) International application number: PCT/CN2014/074982
(87) International publication number: WO 2014/173230

(56) References cited:
- EP-A1- 2 242 215
- CN-A- 1 842 011
- CN-A- 101 001 165
- CN-A- 101 047 601
- CN-A- 101 068 139
- CN-A- 101 771 570
- CN-A- 101 917 648
- US-A1- 2007 008 964

## Description

### Technical Field

The present invention relates to the wireless network field, and in particular, to a main and standby switchover method, apparatus, device, and system for a network device.

### Background of the Related Art

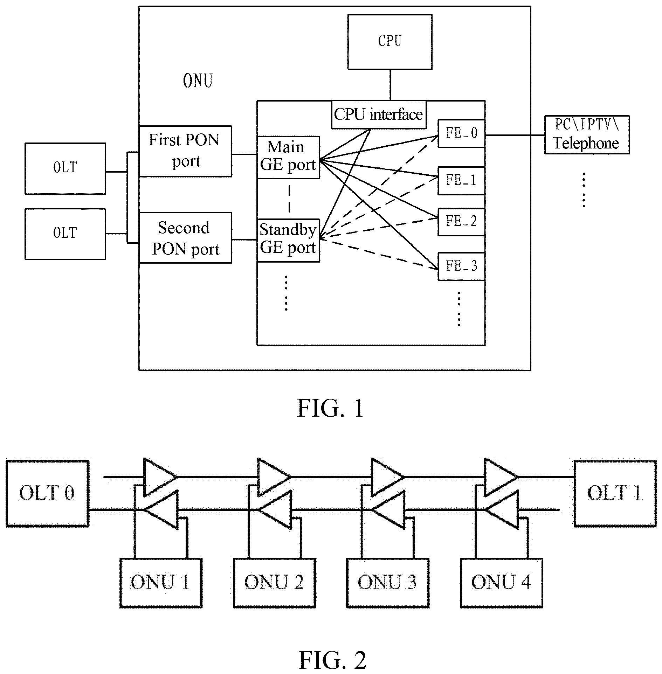

Along with the increasing mature of the optical access network technology, the optical fiber will replace the copper line as the predominant access method. As shown in FIG. 1, an Optical Network Unit (ONU) is set in the corridor of the general residence, which is connected with the Optical Line Terminal (OLT) in the uplink direction through the PON port, and one OLT is responsible for the data transmission of multiple ONUs. Wherein, the Gigabit Ethernet (GE) port in the ONU divides the data and then sends the data to the user in the corridor for using through a Fast Ethernet (FE) port (100-megabit port) (as the PC shown in FIG. 1).

In order to satisfy the disaster tolerance requirement, the main GE port and the standby GE port are set in the optical node ONU. When the main GE port fails, the ONU performs the main and standby switchover of the GE ports. The main and standby switchover of the GE ports is realized by adopting the port isolation method in the related art, that is, after the main GE port is switched to the standby GE port, the isolations are set to isolate main GE port from the standby GE port and isolate the main GE port from all FE ports. Therefore, there are several following problems in the related art:
1, along with the increasing quantity of the ONU ports, setting the isolation time between the ports is caused to be longer, therefore, the switchover time is also extended, which is difficult to satisfy the requirement of the fast switchover.
2, the isolation protection is not performed between the CPU in the ONU in the related isolation method and the standby GE port (as shown in FIG. 1), which causes that the message incoming from the CPU (such as the ping packet) will be sent to all GE ports, and the main and standby PON ports also will send the two same messages, therefore, it is unable to satisfy the hand-in-hand double-link protection requirement of the electricity EPON standard; details refer to FIG. 2.

Note: for the hand-in-hand double-link protection (as shown in FIG. 2), every ONU is connected with 2 OLTs respectively, and it is required that, except the management message between the ONU and the OLT, all other service messages are only received and sent in one direction in any time.

The document EP2242215A1 provides a method and related network node, which allows faster recovery from a failure in a packet-switched provider network. In case of a failure, a redundancy mechanism is initiated which reroutes packet transmission within the provider network via an alternative path and an address withdrawal message is sent to network nodes along the failed path using a data plane protocol. A network node receiving the address withdrawal message will flush the addresses it had learned before.

### Summary of the Invention

The technical problem that the present invention requires to solve is to provide a main and standby switchover method, apparatus, device and system for a network device, which can realize the rapid completion of the main and standby GE ports, and satisfies the hand-in-hand double-link protection requirement of the electricity EPON standard at the same time.

In order to solve the above technical problem, the embodiment of the present invention provides a main and standby switchover method for a network device, comprising:
receiving an interrupt signal indicating that a switchover needs to be performed for main and standby Gigabit Ethernet (GE) ports;
performing a switching operation of the main and standby GE ports, setting the main GE port in a blocked state, and in the blocked state, the main GE port only forwarding a bridge protocol data unit (BPDU) message, and stopping learning an MAC address; and
enabling the standby GE port, setting the standby GE port in a forwarding state, and in the forwarding state, the standby GE port forwarding messages of all types, and learning the MAC address.

Wherein, the step of setting the main GE port in a blocked state comprises:
setting a spanning tree protocol (STP) of the main GE port as a block mode, and enabling the main GE port to enter the blocked state; and
the step of setting a STP of the standby GE port as a forwarding state comprises: setting the STP of the main GE port as a forwarding mode, and enabling the main GE port to enter the forwarding state.

Wherein, after setting a STP of the main GE port as a blocked state, the method further comprises:
deleting all dynamic MAC addresses learnt by the main GE port.

The embodiment of the present invention further provides a main and standby switchover apparatus for a network device, comprising:
a receiving unit, configured to: receive an interrupt signal indicating that a switchover needs to be performed for main and standby Gigabit Ethernet (GE) ports;
a first setting unit, configured to: set the main GE port in a blocked state, and in the blocked state, the main GE port only forwards a bridge protocol data unit (BPDU) message, and stops learning a MAC address; and
a second setting unit, configured to: enable a standby GE port, and set the standby GE port in a forwarding state, and in the forwarding state, the standby GE port forwards messages of all types, and learns the MAC address.

Wherein, the first setting unit is configured to: set a STP of the main GE port as a block mode, and enable the main GE port to enter the blocked state;
the second setting unit is configured to: set the STP of the main GE port as a forwarding mode, and enable the main GE port to enter the forwarding state.

Wherein, the apparatus of the present embodiment further comprises:
a deleting unit, configured to: delete all dynamic MAC addresses learnt by the main GE port after the first setting unit sets the STP of the main GE port as the blocked state.

The embodiment of the present invention further provides an optical network unit (ONU) device, comprising a main GE port, a standby GE port and a CPU; wherein the device of the present embodiment further comprises:
a detection module, configured to: detect state information of the main GE port, and send an interrupt signal indicating that a switchover needs to be performed for main and standby GE ports to the CPU if the switchover needs to be performed for the main and standby GE ports;
a exchanging chip, configured to: set the main GE port in a blocked state, enable the standby GE port, and set the standby GE port in a forwarding state;
the CPU is configured to: control the exchanging chip to work according to the interrupt signal;
wherein, in the blocked state, the main GE port only forwards a bridge protocol data unit (BPDU) message, and stops learning a MAC address; and in the forwarding state, the standby GE port forwards messages of all types, and learns the MAC address.

The embodiment of the present invention further provides a network access system, including the above optical network unit (ONU) device.

The above scheme of the embodiment of the present invention has the following beneficial effects.

In the method, apparatus, device and system of the embodiment of the present invention, it can set the main GE port as the blocked state when the main GE port is switched to the standby GE port, and in the blocked state, the main GE port stops learning the MAC address. There is no need to perform the port isolation for the main GE port and all the FE ports, thereby the switching time is saved; in addition, in the blocked state, the main GE port only forwards the BPDU message, which is able to avoid that the uplink OLT device receives two same non-BPDU messages from the main GE port and the standby GE port, therefore, the hand-in-hand double-link protection requirement of the electricity EPON standard is satisfied. At the same time, the standby GE port enters the forwarding state and forwards the messages of all types, and learns the MAC address, and starts the normal work after learning the MAC address, and the main and standby switchover process is completed.

### Brief Description of Drawings

FIG. 1 is a structure diagram of an ONU in the related art;
FIG. 2 is a structure diagram of a hand-in-hand double-link protection of the electricity EPON standard;
FIG. 3 is a flow chart of a main and standby switchover method for a network device in an embodiment of the present invention;
FIG. 4 is a diagram of detailed steps of a main and standby switchover method for a network device in an embodiment of the present invention;
FIG. 5 is a structure diagram of a main and standby switchover apparatus for a network device in an embodiment of the present invention;
FIG. 6 is a structure diagram of an optical network unit (ONU) device in an embodiment of the present invention;
FIG. 7 is a structure diagram of a network access system in an embodiment of the present invention.

### Preferred Embodiments of the Present Invention

It will be described in detail by combining with the accompanying drawings and the specific embodiments.

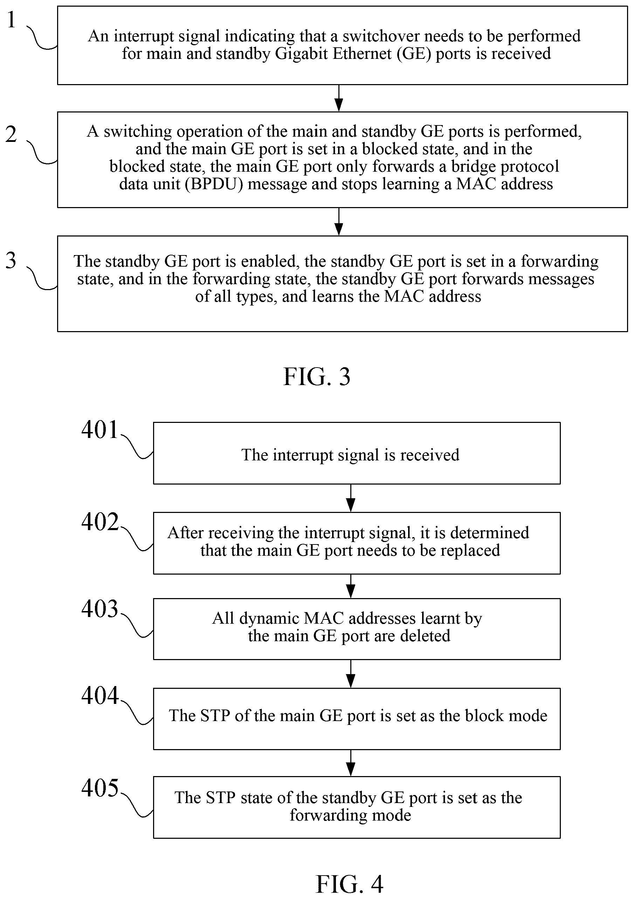

As shown in FIG. 3, a main and standby switchover method for a network device includes the following steps.

In step 1, an interrupt signal indicating that a switchover needs to be performed for main and standby Gigabit Ethernet (GE) ports is received.

In step 2, a switching operation of the main and standby GE ports is performed, and the main GE port is set in a blocked state, and in the blocked state, the main GE port only forwards a bridge protocol data unit (BPDU) message, and stops learning a MAC address.

In step 3, the standby GE port is enabled, and the standby GE port is set in a forwarding state, and in the forwarding state, the standby GE port forwards messages of all types, and learns the MAC address.

In the above method, when the main GE port is switched to the standby GE port, the main GE port is set in the blocked state, and in the blocked state, the main GE port stops learning the MAC address. There is no need to perform the port isolation for the main GE port and all the FE ports, thereby the switching time is saved; in addition, in the blocked state, the main GE port only forwards the BPDU message, which is able to avoid that the uplink OLT device receives two same non-BPDU messages from the main GE port and the standby GE port, therefore, the hand-in-hand double-link protection requirement of the electricity EPON standard is satisfied. At the same time, the standby GE port enters the forwarding state and forwards the messages of all types, and learns the MAC address, and starts the normal work after learning the MAC address, and the main and standby switchover process is completed.

In the above embodiment of the present invention, the setting the standby GE port as a forwarding state in step 2 includes:
setting the spanning tree protocol (STP) of the main GE port as the block mode, and enabling the main GE port to enter the blocked state.

The setting the standby GE port as the forwarding state in step 3 includes: setting the spanning tree protocol (STP) of the main GE port as the forwarding mode, and enabling the main GE port to enter the forwarding state.

The relevant STP includes the several following modes.

Disable: in this mode, all messages received by the port will be discarded and the message forwarding are not performed, and it is unable to learn the source MAC address of the message.

Block: in this mode, the port forwards the received BPDU message to the CPU; except the BPDU message, all other common messages will be discarded; in addition, the port cannot learn the MAC address and discards the source MAC address of the message.

Learning: in this mode, the port forwards the received BPDU message to the CPU; except the BPDU message, all other common messages will be discarded; the port learns the MAC addresses of all received messages.

Forwarding: in this mode, the port forwards the received BPDU message to the CPU; except the BPDU message, all other common messages will also be forwarded; the port learns the MAC addresses of all received messages.

Thus it can be seen that the method specifically realizes setting the states of the main and standby GE ports through changing the STP modes of the main and standby GE ports, thereby controlling forwarding the message and learning the MAC address by the GE ports.

When the main GE port, after being replaced, is restarted next time, its learnt dynamic MAC address probably has already lost its meaning. Therefore, after the STP of the main GE port is set as the blocked state in the above embodiment of the present invention, it also includes:
deleting all dynamic MAC addresses learnt by the main GE port.

As shown in FIG. 4, the procedure of the main GE port switching the standby GE port is described in detail hereinafter.

In step 401, the interrupt signal is received.

In the specific realization method, it can configure an optical module and an optical link detection module for the main GE port. The optical link detection module detects the optical power reception of the optical modules respectively through the way of signaling reporting, and it will generate an alarm interrupt signal for reporting when the optical module is found to be changed (that is, the main GE port is abnormal).

In step 402, after receiving the interrupt signal, it is determined that the main GE port needs to be replaced (for example, when the main GE port is broken down).

In step 403, all dynamic MAC addresses learnt by the main GE port are deleted.

In step 404, the STP of the main GE port is set as the block mode, in the block mode, all messages except the BPDU are discarded, and the MAC address is not learnt; in that mode, it is unable to PING the OLT device through the main GE port.

In step 405, the STP state of the standby GE port is set as the FORWARD mode, in the forwarding state, the messages of all types are forwarded, and the source MAC address of the received message is learnt.

In sum, the above embodiment has several following advantages.
1, the GE port can be isolated or enter the working state through setting the STP of the GE port, therefore, the time for the main and standby switchover of the GE ports is much shorter.
2, the main GE port, after being replaced, only forwards the bridge protocol data unit (BPDU) message, while the message sent by the CPU (such as, the ping packet) is not sent from the main GE port, which avoids that the uplink OLT device receives two same messages from the main GE port and the standby GE port, and satisfies the hand-in-hand protection requirement of the electricity EPON standard.

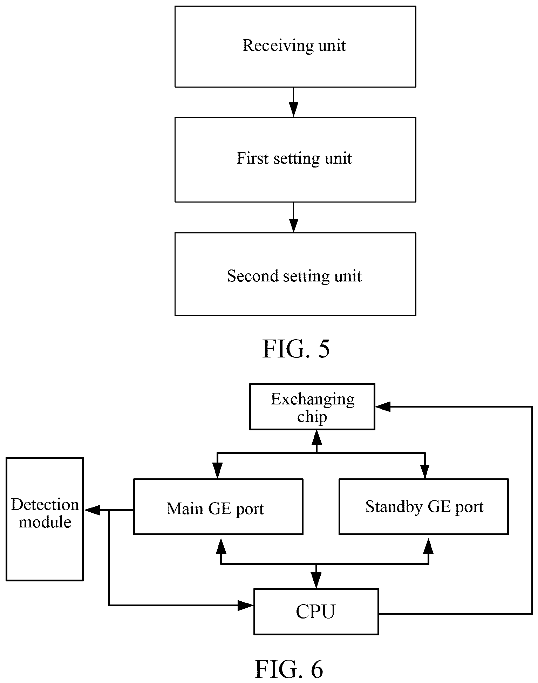

As shown in FIG. 5, the present invention further provides a main and standby switchover apparatus for a network device, including the following units.

A receiving unit is applied to receive an interrupt signal indicating that a switchover needs to be performed for main and standby GE ports.

A first setting unit sets the main GE port in a blocked state, and in the blocked state, the main GE port only forwards a bridge protocol data unit (BPDU) message, and stops learning a MAC address.

A second setting unit is applied to enable the standby GE port, and set the standby GE port in a forwarding state, and in the forwarding state, the standby GE port forwards messages of all types and learns the MAC address.

In the above apparatus, when the main GE port is switched to the standby GE port, the main GE port is set in the blocked state, and in the blocked state, the main GE port stops learning the MAC address. There is no need to perform the port isolation for the main GE port and all the FE ports, thereby the switching time is saved; in addition, in the blocked state, the main GE port only forwards the BPDU message, which is able to avoid that the uplink OLT device receives two same non-BPDU messages from the main GE port and the standby GE port, therefore, the hand-in-hand double-link protection requirement of the electricity EPON standard is satisfied. At the same time, the standby GE port enters the forwarding state and forwards the messages of all types, and learns the MAC address, and starts the normal work after learning the MAC address, and the main and standby switchover process is completed.

In the above embodiment of the present invention, the first setting unit is specifically used to: set a spanning tree protocol (STP) of the main GE port as a block mode, and enable the main GE port to enter the blocked state.

The second setting unit is specifically used to: set the STP of the main GE port as a forwarding mode, and enable the main GE port to enter the forwarding state.

The above device specifically realizes setting the states of the main and standby GE ports through changing the STP modes of the main and standby GE ports thereby controlling forwarding the message and learning the MAC address by the GE ports.

When the main GE port, after being replaced, is restarted next time, its learnt dynamic MAC address probably has already lost its meaning. Therefore, in the above embodiment of the present invention, it further includes the following units.

A deleting unit is used to delete all dynamic MAC addresses learnt by the main GE port after the first setting unit sets the STP of the main GE port as the blocked state.

Apparently, the above embodiment is an apparatus embodiment corresponding to the main and standby switchover method for a network device in the present invention. The apparatus of the present embodiment also can achieve the technology effect achieved by the main and standby switchover method for the network device.

As shown in FIG. 6, the embodiment of the present invention further provides an optical network unit (ONU) device, including a main GE port, a standby GE port and a CPU; wherein the apparatus of the present embodiment further includes the following modules.

A detection module is used to detect the state information of the main GE port, and send an interrupt signal indicating that a switchover needs to be performed for main and standby GE ports to the CPU if the switchover needs to be performed for the main and standby GE ports.

An exchanging chip is used to set the main GE port in a blocked state, enable the standby GE port, and set the standby GE port in a forwarding state.

The CPU is used to: control the exchanging chip to work according to the interrupt signal.

Wherein, in the blocked state, the main GE port only forwards the BPDU message, and stops learning the MAC address; and in the forwarding state, the standby GE port forwards messages of all types, and learns the MAC address.

The exchanging chip in the above device, when the main GE port is switched to the standby GE port, sets the main GE port in the blocked state, and in the blocked state, the main GE port stops learning the MAC address. There is no need to perform the port isolation for the main GE port and all the FE ports, thereby the switching time is saved; in addition, in the blocked state, the main GE port only forwards the BPDU message, which is able to avoid that the uplink OLT device receives two same non-BPDU messages from the main GE port and the standby GE port, therefore, the hand-in-hand double-link protection requirement of the electricity EPON standard is satisfied. At the same time, the PUC sets the standby GE port in the forwarding state and enables it to forward the messages of all types, and learn the MAC address, and start the normal work after learning the MAC address.

Specifically, the CPU in the present embodiment starts the exchanging chip to work when receiving the interrupt signal sent by the detection module and determines that the main GE port is broken down. The exchanging chip starts to delete all dynamic MAC address learnt by the main GE port, and set the STP of the main GE port as the block mode (in the block mode, the main GE port discards all messages except the BPDU and does not learn the MAC address). Now the ONU is unable to PING the uplink OLT device through the main GE port. Later, the CPU sets the STP state of the standby GE port as the forwarding mode (in the forwarding mode, the standby GE port forwards the messages of all types, and learns the source MAC address of the received message).

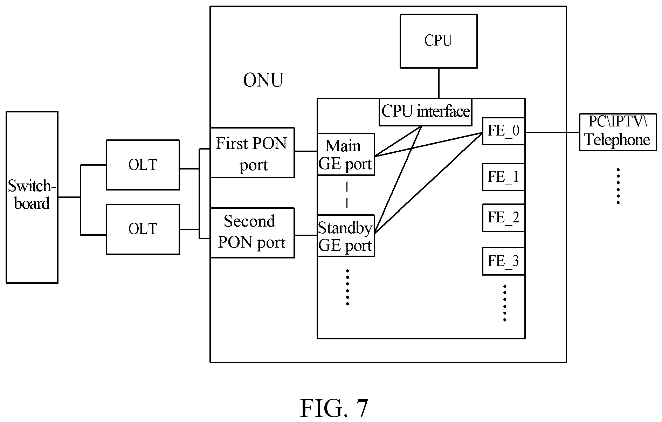

As shown in FIG. 7, the embodiment of the present invention further provides a network access system, including the above-mentioned optical network unit (ONU) device. Wherein, the PC/IPTV/Telephone used by the user is connected to the FE port of the ONU through the cable, and the ONU sends the data stream from the GE port of the ONU according to the configured forwarding rule, the GE port of the ONU is connected to the OLT through the PON port specifically, and the OLT sends out the data according to the configured forwarding rule and accesses the switchboard. In order to achieve the hand-in-hand double-link protection of the electricity EPON standard, every GE port in the ONU is connected to 2 OLTs, and at any time, all other service messages, except the management message between the ONU and the OLT, only can be received from and be sent to one OLT therein through the GE port.

The network access system of the present embodiment only forwards the BPDU message (the BPDU message is a management message) because the main GE port of the ONU is set as the blocked state after being replaced, thereby avoiding that both the main GE port and the standby GE port of ONU send the arp message to the uplink, and reducing the generation of the network storm (at present, two OLT share one cable and are connected with the switchboard in most places, in consequence, there are two OLT which learn the system MAC address of the ONU, and the switchboard receives two data streams of which both the source MAC and the target MAC are same at the same time).

### Industrial Applicability

In the method, apparatus, device and system of the embodiment of the present invention, it can set the main GE port as the blocked state when the main GE port is switched to the standby GE port, and in the blocked state, the main GE port stops learning the MAC address. There is no need to perform the port isolation for the main GE port and all the FE ports, thereby the switching time is saved; in addition, in the blocked state, the main GE port only forwards the BPDU message, which is able to avoid that the uplink OLT device receives two same non-BPDU messages from the main GE port and the standby GE port, therefore, the hand-in-hand double-link protection requirement of the electricity EPON standard is satisfied. At the same time, the standby GE port enters the forwarding state and forwards the messages of all types, and learns the MAC address, and starts the normal work after learning the MAC address, and the main and standby switchover process is completed.

## Claims

1. A main and standby switchover method for a network device, **characterized by** comprising:
receiving an interrupt signal indicating that a switchover needs to be performed for main and standby Gigabit Ethernet, GE, ports (1,401);
performing a switching operation of the main and standby GE ports, setting the main GE port in a blocked state (404), and in the blocked state, the main GE port only forwarding a bridge protocol data unit, BPDU, message, and stopping learning a MAC address (2);; and enabling the standby GE port, setting the standby GE port in a forwarding state (405), and in the forwarding state, the standby GE port forwarding messages of all types, and learning the MAC address (3).

2. The main and standby switchover method for a network device according to claim 1, wherein, the step of setting the main GE port in a blocked state comprises: setting a spanning tree protocol, STP, of the main GE port as a block mode, and enabling the main GE port to enter the blocked state; and
the step of setting the standby GE port as a forwarding state comprises: setting a STP of the standby GE port as a forwarding mode, and enabling the standby GE port to enter the forwarding state.

3. The main and standby switchover method for a network device according to claim 1, wherein after setting the STP of the main GE port in the blocked state, further comprising:
deleting all dynamic MAC addresses learnt by the main GE port (403).

4. A main and standby switchover apparatus for a network device, **characterized by** comprising:
a receiving unit, configured to: receive an interrupt signal indicating that a switchover needs to be performed for main and standby Gigabit Ethernet, GE, ports;
a first setting unit, configured to: set the main GE port in a blocked state, wherein in the blocked state, the main GE port only forwards a bridge protocol data unit, BPDU, message and
stops learning a MAC address; and
a second setting unit, configured to: enable the standby GE port, and set the standby GE port in a forwarding state, wherein in the forwarding state, the standby GE port forwards messages of all types and learns the MAC address.

5. The main and standby switchover apparatus for a network device according to claim 4, wherein, the first setting unit is configured to: set a spanning tree protocol, STP, of the main GE port as a block mode, and enable the main GE port to enter the blocked state; and
the second setting unit is configured to: set a STP of the standby GE port as a forwarding mode, and enable the standby GE port to enter the forwarding state.

6. The main and standby switchover apparatus for a network device according to claim 4, further comprising:
a deleting unit, configured to: delete all dynamic MAC addresses learnt by the main GE port after the first setting unit sets the STP of the main GE port as the blocked state.

7. An optical network unit, ONU, device, comprising: a main Gigabit Ethernet, GE, port, a standby GE port and a CPU, **characterized by** further comprising:
a detection module, configured to: detect state information of the main GE port, and send an interrupt signal indicating that a switchover needs to be performed for main and standby GE ports to the CPU if a main and standby switchover needs to be performed for GE ports;
a exchanging chip, configured to: set the main GE port in a blocked state; enable the standby GE port, and set the standby GE port in a forwarding state;
wherein the CPU is configured to: control the exchanging chip to work according to the interrupt signal;
wherein in the blocked state, the main GE port only forwards a bridge protocol data unit, BPDU, message and stops learning a MAC address; and in the forwarding state, the standby GE port forwards messages of all types and learns the MAC address.

8. A network access system, comprising the optical network unit, ONU, device according to claim 7.

## Patentansprüche

1. Haupt- und Standby-Umschaltverfahren für eine Netzwerkvorrichtung, **dadurch gekennzeichnet, dass** es Folgendes umfasst:
Empfangen eines Unterbrechungssignals, das angibt, das ein Umschalten zwischen einem Haupt- und einem Standby-Gigabit-Ethernet(GE)-Anschluss (1, 401) durchgeführt werden muss;
Durchführen eines Umschaltvorgangs zwischen dem Haupt- und dem Standby-GE-Anschluss, wobei der Haupt-GE-Anschluss in einen gesperrten Zustand (404) versetzt wird und der Haupt-GE-Anschluss im gesperrten Zustand nur eine Nachricht mit einer Brückenprotokolldateneinheit, BPDU (bridge protocol data unit), weiterleitet und keine MAC-Adresse (2) mehr ermittelt; und
Aktivieren des Standby-GE-Anschlusses, wobei der Standby-GE-Anschluss in einen Weiterleitungszustand (405) versetzt wird und der Standby-GE-Anschluss im Weiterleitungszustand Nachrichten aller Art weiterleitet und die MAC-Adresse (3) ermittelt.

2. Haupt- und Standby-Umschaltverfahren für eine Netzwerkvorrichtung nach Anspruch 1, wobei der Schritt des Versetzens des Haupt-GE-Anschlusses in einen gesperrten Zustand Folgendes umfasst: Einstellen eines Spanning-Tree-Protokolls, STP, des Haupt-GE-Anschlusses auf einen Sperrmodus und Aktivieren des Haupt-GE-Anschlusses für einen Wechsel in den gesperrten Zustand; und
der Schritt des Versetzens des Standby-GE-Anschlusses in einen Weiterleitungszustand Folgendes umfasst: Einstellen eines STP des Standby-GE-Anschlusses auf einen Weiterleitungsmodus und Aktivieren des Standby-GE-Anschlusses für einen Wechsel in den Weiterleitungszustand.

3. Haupt- und Standby-Umschaltverfahren für eine Netzwerkvorrichtung nach Anspruch 1, wobei das Verfahren nach dem Einstellen des STP des Haupt-GE-Anschlusses auf den gesperrten Zustand, ferner Folgendes umfasst:
Löschen aller dynamischen MAC-Adressen, die von dem Haupt-GE-Anschluss (403) ermittelt wurden.

4. Haupt- und Standby-Umschaltvorrichtung für eine Netzwerkvorrichtung, **dadurch gekennzeichnet, dass** sie Folgendes umfasst:
eine Empfangseinheit, die zu Folgendem konfiguriert ist:
Empfangen eines Unterbrechungssignals, das angibt, dass ein Umschalten zwischen einem Haupt- und einem Standby-Gigabit-Ethernet-GE-Anschluss durchgeführt werden muss;
eine erste Einstellungseinheit, die zu Folgendem konfiguriert ist: Versetzen des Haupt-GE-Anschlusses in einen gesperrten Zustand, wobei der Haupt-GE-Anschluss im gesperrten Zustand nur eine Nachricht mit einer Brückenprotokolldateneinheit, BPDU, weiterleitet und keine MAC-Adresse mehr ermittelt; und
eine zweite Einstellungseinheit, die zu Folgendem konfiguriert ist: Aktivieren des Standby-GE-Anschlusses und Versetzen des Standby-GE-Anschlusses in einen Weiterleitungszustand, wobei der Standby-GE-Anschluss im Weiterleitungszustand Nachrichten aller Art weiterleitet und die MAC-Adresse ermittelt.

5. Haupt- und Standby-Umschaltvorrichtung für eine Netzwerkvorrichtung nach Anspruch 4, wobei die erste Einstellungseinheit zu Folgendem konfiguriert ist: Einstellen eines Spanning-Tree-Protokolls, STP, des Haupt-GE-Anschlusses auf einen Sperrmodus und Aktivieren des Haupt-GE-Anschlusses für einen Wechsel in den gesperrten Zustand; und
die zweite Einstellungseinheit zu Folgendem konfiguriert ist: Einstellen eines STP des Standby-GE-Anschlusses auf einen Weiterleitungsmodus und Aktivieren des Standby-GE-Anschlusses für einen Wechsel in den Weiterleitungszustand.

6. Haupt- und Standby-Umschaltvorrichtung für eine Netzwerkvorrichtung nach Anspruch 4, ferner umfassend:
eine Löscheinheit, die zu Folgendem konfiguriert ist: Löschen aller dynamischen MAC-Adressen, die von dem Haupt-GE-Anschluss ermittelt wurden, nachdem die erste Einstellungseinheit das STP des Haupt-GE-Anschlusses auf den gesperrten Zustand eingestellt hat.

7. Vorrichtung mit optischer Netzwerkeinheit, ONU (optical network unit), umfassend: einen Haupt-Gigabit-Ethernet-GE-Anschluss, einen Standby-GE-Anschluss und eine CPU (zentrale Verarbeitungseinheit), **dadurch gekennzeichnet, dass** sie ferner Folgendes umfasst:
ein Erfassungsmodul, das zu Folgendem konfiguriert ist: Erfassen von Zustandsinformationen des Haupt-GE-Anschlusses und Senden eines Unterbrechungssignals, das angibt, dass ein Umschalten zwischen dem Haupt- und dem Standby-GE-Anschluss durchgeführt werden muss, an die CPU, wenn ein Haupt- und Standby-Umschalten zwischen GE-Anschlüssen durchgeführt werden muss;
einen Wechselchip, der zu Folgendem konfiguriert ist: Versetzen des Haupt-GE-Anschlusses in einen gesperrten Zustand; Aktivieren des Standby-GE-Anschlusses und Versetzen des Standby-GE-Anschlusses in einen Weiterleitungszustand;
wobei die CPU zu Folgendem konfiguriert ist: Steuern des Wechselchips derart, dass er gemäß dem Unterbrechungssignal arbeitet;
wobei der Haupt-GE-Anschluss im gesperrten Zustand nur eine Nachricht mit einer Brückenprotokolldateneinheit, BPDU, weiterleitet und keine MAC-Adresse mehr ermittelt; und der Standby-GE-Anschluss im Weiterleitungszustand Nachrichten aller Art weiterleitet und die MAC-Adresse ermittelt.

8. Netzwerkzugangssystem, umfassend die Vorrichtung mit der optischen Netzwerkeinheit, ONU, nach Anspruch 7.

## Revendications

1. Procédé de basculement entre principal et de réserve pour un dispositif de réseau, **caractérisé en ce qu'**il comprend :
la réception d'un signal d'interruption indiquant qu'un basculement doit être effectué pour des ports Gigabit Ethernet, GE, principal et de réserve (1, 401) ;
l'exécution d'une opération de commutation des ports GE principal et de réserve, le réglage du port GE principal dans un état bloqué (404), et dans l'état bloqué, le port GE principal transférant seulement un message d'unité de données de protocole de pont, BPDU, et arrêtant l'apprentissage d'une adresse MAC (2) ; et
l'activation du port GE de réserve, le réglage du port GE de réserve dans un état de transfert (405), et dans l'état de transfert, le port GE de réserve transférant des messages de tous les types, et apprenant l'adresse MAC (3).

2. Procédé de basculement entre principal et de réserve pour un dispositif de réseau selon la revendication 1, dans lequel l'étape de réglage du port GE principal dans un état bloqué comprend : le réglage d'un protocole d'arbre recouvrant, STP, du port GE principal comme un mode de bloc, et l'activation du port GE principal pour passer dans l'état bloqué ; et
l'étape de réglage du port GE de réserve comme un état de transfert comprend : le réglage d'un STP du port GE de réserve comme un mode de transfert, et l'activation du port GE de réserve pour passer dans l'état de transfert.

3. Procédé de basculement entre principal et de réserve pour un dispositif de réseau selon la revendication 1, dans lequel, après le réglage du STP du port GE principal dans l'état bloqué, comprenant en outre :
l'effacement de toutes les adresses MAC dynamiques apprises par le port GE principal (403).

4. Appareil de basculement entre principal et de réserve pour un dispositif de réseau, **caractérisé en ce qu'**il comprend :
une unité de réception configurée pour : recevoir un signal d'interruption indiquant qu'un basculement doit être effectué pour des ports Gigabit Ethernet, GE, principal et de réserve ;
une première unité de réglage configurée pour : régler le port GE principal dans un état bloqué, dans lequel, dans l'état bloqué, le port GE principal transfère seulement un message d'unité de données de protocole de pont, BPDU, et arrête l'apprentissage d'une adresse MAC ; et
une seconde unité de réglage configurée pour : activer le port GE de réserve, et régler le port GE de réserve dans un état de transfert, dans lequel, dans l'état de transfert, le port GE de réserve transfère des messages de tous les types et apprend l'adresse MAC.

5. Appareil de basculement entre principal et de réserve pour un dispositif de réseau selon la revendication 4, dans lequel la première unité de réglage configurée pour : régler un protocole d'arbre recouvrant, STP, du port GE principal comme un mode de bloc, et activer le port GE principal pour passer dans l'état bloqué ; et
la seconde unité de réglage configurée pour : régler un STP du port GE de réserve comme un état de transfert et activer le port GE de réserve pour passer dans l'état de transfert.

6. Appareil de basculement entre principal et de réserve pour un dispositif de réseau selon la revendication 4, comprenant en outre :
une unité d'effacement configurée pour : effacer toutes les adresses MAC dynamiques apprises par le port GE principal après que la première unité de réglage règle le STP du port GE principal comme l'état bloqué.

7. Dispositif d'unité de réseau optique, ONU, comprenant : un port Gigabit Ethernet, GE, principal et un port GE de réserve et une CPU, **caractérisé en ce qu'**il comprend en outre :
un module de détection configuré pour : détecter des informations d'état du port GE principal, et envoyer un signal d'interruption indiquant qu'un basculement doit être effectué pour des ports GE principal et de réserve à la CPU si un basculement entre principal et de réserve doit être effectué pour des ports GE ;
une puce d'échange configurée pour : régler le port GE principal dans un état bloqué ; activer le port GE de réserve et régler le port GE de réserve dans un état de transfert ;
dans lequel la CPU est configurée pour : commander la puce d'échange pour fonctionner en fonction du signal d'interruption ; dans lequel dans l'état bloqué, le port GE principal transfère seulement un message d'unité de données de protocole de pont, BPDU, et arrête l'apprentissage d'une adresse MAC ; et dans l'état de transfert, le port GE de réserve transfère des messages de tous les types et apprend l'adresse MAC.

8. Système d'accès au réseau, comprenant le dispositif d'unité de réseau optique, ONU, selon la revendication 7.
